Europäisches Patentamt

(19) European Patent Office

Office européen des brevets

(11) Publication number: **0 180 375**
**A1**

## (12) EUROPEAN PATENT APPLICATION

(21) Application number: **85307447.4**

(22) Date of filing: **16.10.85**

(51) Int. Cl.⁴: **A 47 J 36/28**

(30) Priority: **16.10.84 GB 8426126**

(43) Date of publication of application: **07.05.86**
**Bulletin 86/19**

(84) Designated Contracting States: **AT BE CH DE FR GB IT LI LU NL SE**

(71) Applicant: **HOTCAN LIMITED, 44 Green Street, London W1Y 3FJ (GB)**

(72) Inventor: **Covington, Timothy Andrew, 22 Royd Lane Deepcar, Sheffield S30 South Yorkshire (GB)**

(74) Representative: **Bridge-Butler, Alan James et al, G.F. REDFERN & CO. High Holborn House 52/54 High Holborn, London WC1V 6RL (GB)**

(54) **Self heating containers.**

(57) Apparatus for heating the contents of a container (1) comprising a housing (2) within which a container can be located to leave a space (5) between its outer wall and the inner wall of the casing, said space containing a liquid substance (6) and a solid substance (7) and which when mixed react to liberate heat, and in which said solid substance is carried in a flexible bag or pouch which can be readily pierced or opened to allow intermingling of the substances.

## SELF HEATING CONTAINERS

This invention relates to apparatus for heating the contents of a container.

It is known to use self-heating containers for foodstuffs or other materials in which the contents are first packed into an inner container such as a conventional food can and this is then placed in an outer housing to leave an annular space between the can and the inner wall of the housing. Located in this annular chamber are two substances one liquid and one solid which when mixed, react to liberate sufficient heat to warm the contents of the inner container to a desired temperature. There are various methods of separating the substances, for example, in French Patent Specification No. 826 637, the liquid substance is held in an annular container above the solid material which, in this case, is a lime.

The difficulty with the earlier forms of construction is that the can which is to be heated usually forms the inner wall of the annular chamber. Thus, it is difficult to insert the said reactive substances in the housing prior to inserting the can. Moreover, once the can has been inserted the substances have to be inserted into the annular gap and this is a time consuming and difficult proceedure, especially to ensure that sufficient of the solid substance has been inserted and is properly packed around the can prior to adding the second substance.

In some earlier constructions it is also necessary to add a spacer between the two substances in the form of an annular plate which is sealed to the outer surface of the can and to the inner surfaces of the housing. Again, this is a difficult and expensive process.

It is also possible to arrange for the two reactive substances to be located between the end wall of the container and the bottom wall of the housing. In this arrangement it is necessary for the solid substance to be packed first prior to inserting the container. With this arrangement there are often difficulties in properly packing the solid substance and again it is usually necessary to provide some kind of wall over the substance once it has been packed prior to inserting the liquid substance. It will be appreciated that there are obvious difficulties in sealing within the housing.

In order to allow for the two substances to mix it is known to provide a spike which can be driven down into the wall which forms a barrier between the substances to allow the liquid to penetrate the solid substance.

The earlier constructions are for "once only" use, that is, once the apparatus has been used for heating the contents of the container it is usually destroyed or thrown away and there is no provision for re-using the housing with another container. The reason for this is that the solid substance is merely placed in the housing but a particular desired quantity is necessary with a particular quantity of liquid. There is therefore no provision for providing set quantities of the solid substance although it is relatively easy to provide said quantities of a liquid merely by measuring it in a suitable container. The present invention allows for a construction in which measured quantities of the solid substance can be provided and thus the housing can be re-used. This brings further advantages in that the container need not be filled with a pre-packed contents but can be used to heat any substance as required which is merely poured or placed in the container itself. The arrangement can be such that the housing can be used with either a container with pre-packed contents or an open container which may or may not have a lid.

According to the present invention apparatus for heating the contents of a container comprise a housing within which a container is located to leave a space between its outer wall and the inner wall of the casing, said space containing a liquid substance and a solid substance and which when mixed react to liberate heat, and in which said solid substance is carried in a flexible bag or pouch which can be readily pierced or opened to allow intermingling of the substances.

As a result of pre-packing the solid substance in a flexible bag or pouch the construction of the apparatus is considerably simplified and thus the outer housing and reactive substance can be supplied to a manufacturer for assembly with a suitable can of materials.

A flexible bag or pouch can be easily located in the annular chamber after the inner container has been placed in the housing or it can be located in place in the surrounding housing and the inner container then slid into place prior to sealing the top of the housing.

Yet again the flexible bag or pouch can be placed in the lower part of the housing and, if desired, the liquid merely poured onto it prior to insertion, or after insertion of the inner container.

It will be seen that there are many advantages and ways of assembly.

Preferably the solid substance is carried in a flexible bag made from a plastics material and the liquid may also be carried in a suitable bag or pouch.

The bags or pouches can be interconnected, thus one pouch could be within the other and if desired the flexible pouches can be interconnected by a weaked wall which can be ruptured by sufficient pressure in or on one of the bags.

Alternatively the flexible bag or pouch could be arranged to be ruptured by a suitable spike.

In one convenient form of construction the flexible pouch is located in an annular space within the housing or alternatively it can be located beneath the container when in position within the housing.

Means can be provided on the housing for piercing or opening the pouch or pouches and these may include means for causing the container to press against the pouch or pouches to open them.

The housing may include a removable closure which acts on the container to press it against the pouch or pouches to pierce or open them.

Means may be provided for locating the pouch or pouches in the housing prior to insertion of the container and these may be in the form of a thin cage or framework.

Preferably the two reactive substances are water and a suitable form of lime.

If two pouches are used, interconnected or separate, or one within the other, they can be located in a thin cage or framework made from, for example, plastics material which will melt when heating takes place and this cage will act as a wrapper, to assist in handling the two bags when placing them into the housing before or after the inner container has been assembled therein.

Again, if desired, the flexible pouch or pouches can be assembled around the inner container and the container and pouch or pouches then placed within the housing. It will be appreciated that the thin location device such as a cage or wrapper will again assist in assembly although if the bags are in annular form, such a cage or wrapper may not be necessary.

The invention also includes apparatus for heating the contents of a container comprising a housing within which a container can be located to leave a space between its outer wall and the inner wall of the housing, a solid substance carried in a flexible bag or pouch located in said space, said substance reacting to cause heat when mixed with a suitable liquid substance, and means for supporting said container within said housing.

If desired a suitable liquid substance could also be provided in a flexible pouch.

Thus this ready prepared housing and the pouches will enable canners to pack their own products into a self-heating housing without difficulties.

The end of the housing can be closed by any appropriate sealing means which, if desired, may be arranged to be penetrated by a spike which can pass through the pouches to allow the reaction between the substances to take place.

Once again, the pouches may be interconnected, when there are two of them, by a weakened wall which can be ruptured by sufficient pressure on one of the pouches.

If desired the housing can be provided with means for causing said container, when in position, to press against the pouch or pouches to pierce or open them.

As referred to above such apparatus can be provided separately from a container so that any suitable container containing any suitable product can be inserted into it for heating or, again, an open container with or without a lid can be used to heat any suitable substance.

It will also be appreciated that the apparatus may merely be supplied with a solid substance in its flexible bag or pouch and the liquid, for example water, could be added as desired, from a suitable measuring container.

The invention can be performed in many ways and some embodiments will now be described by way of example and with reference to the accompanying drawings in which :

Figure 1 is a side view of an assembled self-heating container according to the invention with the housing and bags or pouches for the reactive substances in cross-section;

Figure 2 is an exploded view of the various parts of an alternative construction ready for assembly;

Figures 3 and 4 are cross-sectional view through the bags or pouches for the reactive substances with one receptacle located within the other;

Figure 5 is a cross-sectional view through an assembled self-heating container in which only the solid substance is provided in a bag or pouch:

Figure 6 is a cross-sectional side elevation through an alternative construction in which the container can be removed and in which the housing can be re-used.

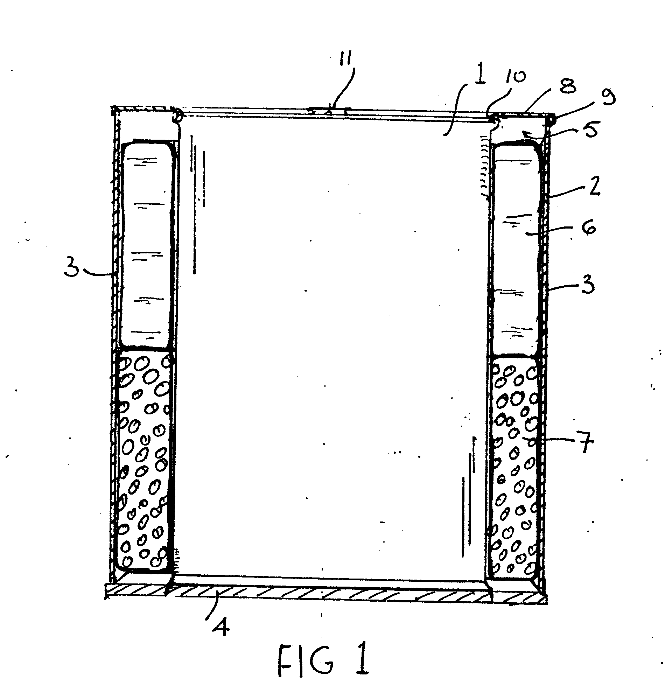

The same reference numerals will be used in all Figures to indicate similar parts in the various constructions shown. As shown in Figure 1 the apparatus according to the invention comprises a closed inner container 1 which can be a food can of well known kind container any substance which is to be heated. Thus, the can could contain foodstuffs or a medical substance, for example, kaolin, or it could container for example a glue which requires heating.

The inner container 1 is located within a surrounding housing 2 made of metal and which is provided with side walls 3 and a base wall 4. The parts being crimped or welded together in any convenient manner. The gap between the outer wall of the inner container 1 and the inner surfaces of the walls 3 provide an annular chamber indicated by reference numeral 5 in which are located two sealed bags or pouches, made, for example, from a flexible plastics material. The upper pouch 6 contains water and the lower sealed pouch 7 contains a convenient form of lime.

In the arrangement shown in Figure 1 the pouches 6 and 7 are annular and are filled and sealed as required. In an alternative arrangement the pouches could be substantially "sausage" shaped and bent around into an annular form.

In order to assemble the self-heating container the inner can 1 is placed within the housing 2 and the pouches 6 and 7 are then slid down into the annular chamber 5. The annular chamber 5 is then closed by a lid 8 which is crimped at 9 and 10 to the outer walls 3 of the housing and the top of the inner container 1 respectively.

The inner container 1 is provided with a ringed top tear-off fitting 11.

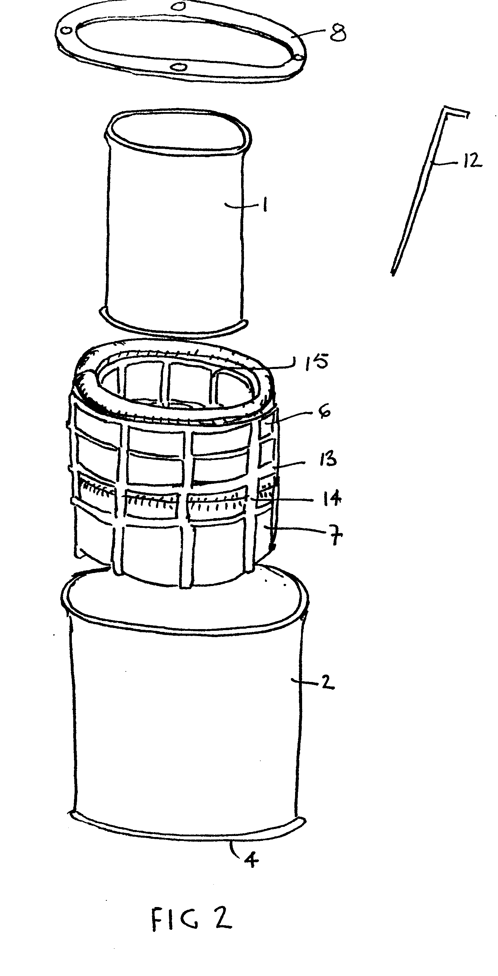

When the contents of the inner container are to be heated a spike 12 as shown in Figure 2, and which is supplied with the pack is used to penetrate the lid 8, the upper pouch 6, the lower end of the pouch 6 and the upper end of the pouch 7 so that water can flow by gravity into the lime, the resulting reaction causes heat which warms the inner container 1 and the contents therein. The quantities of the water and lime are arranged appropriately and any steam which is formed is accommodated by the collapse of the pouches 6 and 7.

The general process by which heat is formed is well-known in itself and will not be described further.

Inner container 1 can be opened when it is heated by operating the known opening device 11.

In the arrangement described above the sealed pouches 6 and 7 are inserted after assembly of the inner container 1 into the housing 2 but if required they could be inserted first and the inner container 1 then inserted into the space in the centre of the housing. Again, the pouches are shown as being separate but they could be interconnected, that is, the adjacent walls could be connected to form a unitary construction which would assist in assembly.

Figure 2 shows a somewhat similar construction but in this arrangement the pouches, separate or connected are held in a light cage made of plastics material and indicated by reference numeral 13. The cage 13 comprises an outer framework 14 and an inner framework 15 which are interconnected at their lower ends to leave a space between them into which the receptacles 6 and 7 can be placed. The cage 13 provides a semi-rigid construction which thus enables the pouches 6 and 7 to be located in position in the housing 2 prior to insertion of the inner container 1.

The use of such a cage also enables the pouches 6 and 7 to be made up and placed in the housing 2 so that such a housing together with an upper lid 8 and spike 12 can be supplied to a canner who can thus merely assemble the inner container 1 containing the appropriate product into the assembly and then fasten the lid 8 in position. Alternatively the case 14 also enables the pouches 6 and 7 to be easily slid into position after the container 1 has been located in the housing 2 and prior to fastening of the lid 8.

In an alternative construction the light cage 13 could be replaced by a light plastic envelope which would act in the same way. It will be seen that the upper end of the cage 13 as shown in Figure 2 is open so that the pouches 6 and 7 can be placed within it.

The use of the cage 13 or a similar envelope enables the pouches 6 and 7 to be held as an annulus which assists assembly.

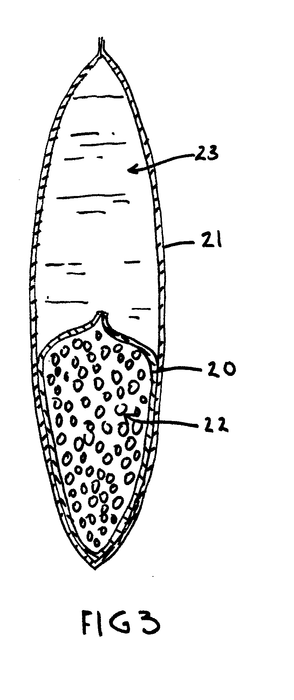

In the arrangement shown in Figure 3 the pouches 20 and 21 are in the form of flexible plastic bags. The bag 20 is located within the bag 21. In the arrangement shown in Figure 3 the bag 20 contains the lime, indicated by reference numeral 22 and the bag 21 contains the water indicated by reference numeral 23.

The two bags can be assembled together in any convenient manner, for example, the bag 20 can be filled with lime 22 and then inserted through a suitable opening in the bag 21 which is then subsequently filled with water 23 and appropriately sealed.

It will be appreciated that the inner bag 20 containing the lime 22 will have to be sufficiently strong and watertight to ensure that there is no seepage of water into the lime prior to use.

The bags are assembled in the manner described above with regard to the other Figures and are pierced in a similar manner. As described above the bags can be annular and in which case the whole of one annular edge will have to be sealed after assembly or the outer bag could be annular and the inner bag of a simple straight construction which can be easily inserted into the annular bag and will extend around the full annulus when placed in position.

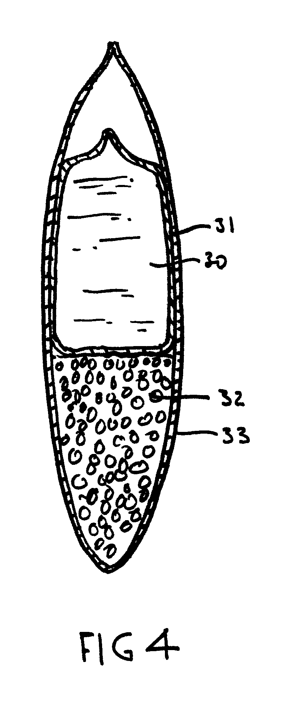

In an alternative arrangement shown in Figure 4 the water or liquid 30 is held in the inner bag 31 and the lime or other materials 32 in the outer bag 33. The outer bag 33 is first loaded with the lime and the sealed water bag 31 then inserted above it so that it rests upon the lime. The outer bag 33 is then sealed. The length of the spike for piercing the bags is arranged so that it ensures that the top and bottom of the water bag 31 are suitably pierced to allow the water 30 to pass under gravity onto the lime 32.

In the arrangement described above it is intended to pierce the bags or pouches with the spike 12 but in an alternative construction the two pouches can have a weakened interconnecting wall so that when pressure is placed on one or both the pouches the wall will rupture to allow the contents to mix. If this arrangement is used in a construction as shown in Figure 1 then arrangements can be made for the lid 8 to be removable and for a suitable pressure ring to be provided which can be forced downwardly by any convenient means to cause the interconnecting wall of the bag to rupture.

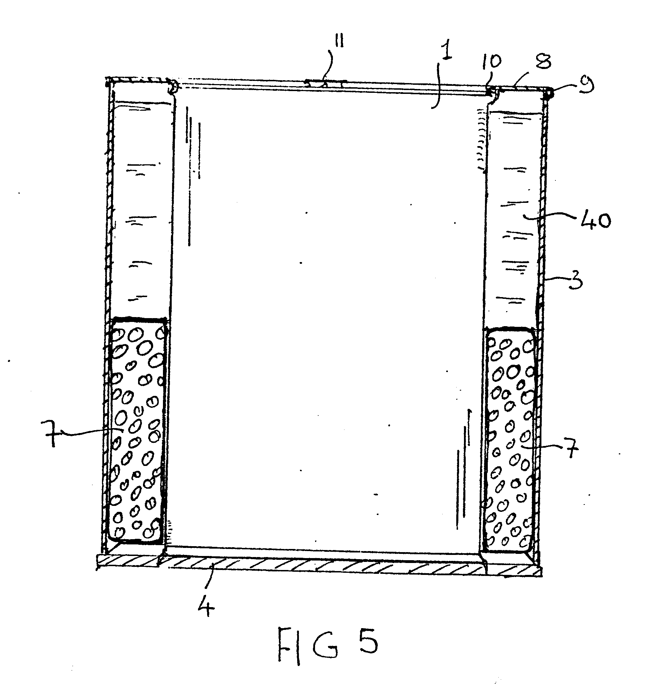

In the arrangement shown in Figure 5 the pouch 6 containing the water as shown in Figure 1 is omitted and a suitable quantity of water, indicated by reference numeral 40 is provided. It is relatively easy to load the water into the outer housing compared with packing free granules of lime.

A spike 12 is again provided to pierce the pouches 7.

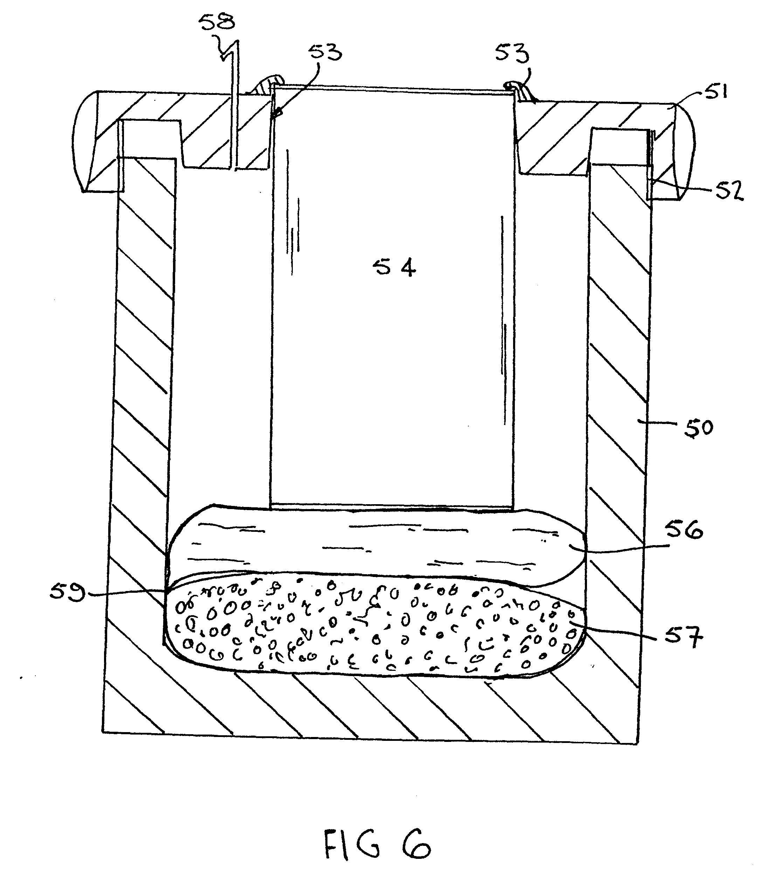

Figure 6 shows a construction in which the housing indicated by reference numeral 50 is re-usable. This construction comprises an outer housing 50 made from a suitable plastics material which provides sufficient insulation to prevent excess heat generating on its outer surface when in use. The upper open end of the housing 50 is closed by a screw threaded removable closure 51 which engages suitable screw-threaded portion 52 at the upper end of the housing 50. An opening 53 is provided in the closure 51 and is dimensioned to closely receive an inner container 54. This container which can be a food can of standard dimensions engages an annular clasp 55 when placed in position.

Located beneath the food can and below its lower wall and the inner wall of the housing 50 are a pair of interconnected pouches, the upper pouch 56 containing water and the lower pouch 57 containing lime. The pouches are interconnected by a weakened wall so that when sufficient pressure is applied the wall will rupture and allow the water to enter the pouch 57.

A vent valve 58 is provided to allow steam to escape.

In order to use the apparatus it is merely necessary to unscrew the closure member 50, place a can of food to be heated into the opening 53 so that it engages the clasp 55. A pair of interconnected pouches are now placed within the housing and the closure complete with food can is placed in position and screwed down. The lower end of the food can 54 engages the pouches 56 and 57 and provides sufficient pressure to cause the interconnecting weakened wall, indicated by reference numeral 59, to rupture. Steam generated can escape through the vent.

If desired the food can can be opened prior to causing the pouches to be ruptured so that the food can be stirred.

The food can be eaten directly from the can or the closure can be opened and the can removed as required.

The remaining contents of the housing can now be disposed of and the housing washed out ready for re-use.

It will be appreciated that the food can could be replaced by a suitable open container into which food can be placed as desired and thus the inner container indicated by reference numeral 54 could be permanently attached to the closure 51 or, it could be removable in the manner described.

It will be seen that the apparatus provides means for heating containers such as food cans and which can be re-used it merely being necessary to carry a supply of suitable pouches.

This aspect of the invention is applicable to many uses, for example, at sea and for outdoor activities.

0180375

-14-

CLAIMS

1.  Apparatus for heating the contents of a container comprising a housing within which a container is located to leave a space between its outer wall and the inner wall of the casing, said space containing a liquid substance and a solid substance and which when mixed react to liberate heat, and in which said solid substance is carried in a flexible bag or pouch which can be readily pierced or opened to allow intermingling of the substances.

2.  Apparatus as claimed in claim 1 in which said solid substance is carried in a flexible bag made from a plastics material.

3.  Apparatus as claimed in claim 1 or claim 2 in which the liquid is also carried in a flexible bag or pouch.

4.  Apparatus as claimed in claim 3 in which said bags or pouches are interconnected.

5.  Apparatus as claimed in claim 3 in which one pouch is within the other.

6.  Apparatus as claimed in claim 5 in which the pouch containing the solid substance is within the pouch containing the liquid.

7.  Apparatus as claimed in claims 4, 5 or 6 in which both substances are carried in flexible pouches which are interconnected by a weakened wall which can be ruptured by sufficient pressure in one of the pouches.

8.      Apparatus as claimed in any one of the preceding claims in which said flexible pouche is located in an annular space within said housing.

9.      Apparatus as claimed in claims 1 - 8 in which said flexible pouch is located beneath said container when in position within the housing.

10.     Apparatus as claimed in claims 1 - 9 in which means are provided on the housing for piercing or opening the pouch or pouches.

11.     Apparatus as claimed in claim 10 in which the piercing or opening means includes means for causing the container to press against the pouch or pouches to open them.

12.     Apparatus as claimed in claim 10 or claim 11 in which the housing includes a removable closure.

13.     Apparatus as claimed in claim 12 in which said closure acts on said container to press against the pouch or pouches to pierce or open them.

14.     Apparatus as claimed in claims 1 - 13 including means for locating the pouch or pouches in the housing prior to insertion of the container.

15.     Apparatus as claimed in claim 14 in which the receptacles are located in a thin cage or frame work.

16.     Apparatus as claimed in any one of the preceding claims in which the two reactive substances are water and a suitable form of lime.

17. Apparatus as claimed in any one of the preceding claims in which the container is ready-filled prior to location in the housing.

18. Apparatus as claimed in claims 1 - 16 in which the container is open with or without a removable lid and is re-usable.

19. Apparatus as claimed in claim 1 in which the container is removable after use to allow the housing to be cleaned and re-used.

20. Apparatus for heating the contents of a container comprising a housing within which a container can be located to leave a space between its outer wall and the inner wall of the housing, a solid substance carried in a flexible bag or pouch located in said space, said substance reacting to cause heat when mixed with a suitable liquid substance, and means for supporting said container within said housing.

21. Apparatus as claimed in claim 20 in which a suitable liquid substance is also provided in a flexible pouch.

22. Apparatus as claimed in claim 21 in which the pouches are inter connected by a weakened wall which can be ruptured by sufficient pressure on one of the pouches

23. Apparatus as claimed in claim 22 in which the housing is provided with means for causing said container when in position to press against the pouch or pouches to pierce or open them.

24.     Apparatus for heating the contents of a container substantially as described herewith with reference to and as shown in the accompanying drawings.

FIG 1

0180375

FIG 2

FIG3

FIG 4

0180375

FIG 5

FIG 6

0180375

European Patent Office

**EUROPEAN SEARCH REPORT**

Application number

EP 85 30 7447

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 553 692 (CHRISTEN)  <br><br>* Whole document *  <br><br>--- | 1-3,9, 10,14, 16,17, 19-21 | A 47 J 36/28 |
| X | US-A-2 300 793 (MARTIN)  <br><br>* Whole document *  <br><br>--- | 1,8,10 ,16,17 ,20 | |
| X | US-A-3 561 424 (FAILLA)  <br><br><br>* Whole document *  <br><br>--- | 1-3,9, 10,14, 16,18- 21,23 | |
| X | DE-U-1 951 256 (MAYER)  <br><br>* Claim 1; figure *  <br><br>--- | 1-5,7, 10,16, 20,21 | TECHNICAL FIELDS SEARCHED (Int. Cl.4)  <br><br>A 47 J <br>F 24 J <br>F 25 D |
| A | US-A-3 675 637 (TRIMBLE)  <br><br>* Whole document *  <br><br>--- | 1,3,10 ,13 | |
| A | FR-A-2 361 281 (SAFT) <br>* Whole document *  <br><br>--- | 1-3,13 | |
| A | US-A-3 950 158 (GOSSETT) <br>* Whole document *  <br><br>--- -/- | 2-5,7 | |

The present search report has been drawn up for all claims

| Place of search | Date of completion of the search | Examiner |
|---|---|---|
| THE HAGUE | 21-01-1986 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

**European Patent Office**

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | US-A-2 265 172 (KATZ) | | |
| A | US-A-2 553 878 (STEVEN) | | |
| D,A | US-A-2 212 441 (KATZ) | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 21-01-1986 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82